# EUROPÄISCHE PATENTSCHRIFT

(11) **EP 1 066 104 B1**
(45) Veröffentlichungstag und Bekanntmachung des Hinweises auf die Patenterteilung: **12.11.2003**
(21) Anmeldenummer: 99916791.9
(22) Anmeldetag: 15.03.1999
(51) Int. Cl.: B01D 53/94, F01N 3/20

(54) **VERFAHREN UND VORRICHTUNG ZUR KATALYTISCHEN REDUZIERUNG VON STICKOXIDEN IM ABGAS EINER VERBRENNNUNGSANLAGE**
METHOD AND DEVICE FOR CATALYTIC REDUCTION OF NITROGEN OXIDES IN THE EXHAUST GAS OF AN INTERNAL COMBUSTION SYSTEM
PROCEDE ET DISPOSITIF DE REDUCTION CATALYTIQUE D'OXYDES D'AZOTE CONTENUS DANS LES GAZ D'ECHAPPEMENT D'UNE INSTALLATION A COMBUSTION INTERNE

(30) Priorität: 27.03.1998 DE 19813722
(43) Veröffentlichungstag der Anmeldung: 10.01.2001
(73) Patentinhaber: SIEMENS AKTIENGESELLSCHAFT, 80333 München (DE)
(72) Erfinder: NEUFERT, Ronald, D-96247 Michelau (DE)
(86) Internationale Anmeldenummer: DE9900702
(87) Internationale Veröffentlichungsnummer: WO99049957

(56) Entgegenhaltungen:
- WO-A-97/36676
- DE-A- 4 308 542
- US-A- 5 601 792
- PATENT ABSTRACTS OF JAPAN vol. 018, no. 044 (M-1547), 24. Januar 1994 (1994-01-24) & JP 05 272331 A (HINO MOTORS LTD), 19. Oktober 1993 (1993-10-19)
- PATENT ABSTRACTS OF JAPAN vol. 017, no. 285 (C-1066), 2. Juni 1993 (1993-06-02) & JP 05 015739 A (SEKIYU SANGIYOU KATSUSEIKA SENTAA;OTHERS: 02), 26. Januar 1993 (1993-01-26)

## Beschreibung

Die Erfindung bezieht sich auf ein Verfahren und auf eine Vorrichtung zur katalytischen Reduzierung von Stickoxiden im Abgas einer Verbrennungsanlage, insbesondere im Abgas eines mit Luftüberschuß betriebenen Verbrennungsmotors.

Zur Reduzierung der Stickoxide im Abgas von Verbrennungsanlagen sind Vorrichtungen und Verfahren bekannt, die die Stickoxide analog zu dem in Kraftwerken bewährten Verfahren der selektiven katalytischen Reduktion (SCR) zu Stickstoff reduzieren (DE-A-36 15 021, EP-A-0 277 765). Hierzu werden sogenannte DeNOx-Katalysatoren und Ammoniak als Reduktionsmittel eingesetzt.

Im Falle von in Kraftfahrzeugen verwendeten Verbrennungsmotoren, insbesondere bei Dieselmotoren, sollte das Ammoniak jedoch aufgrund seiner Giftigkeit nicht im Fahrzeug mitgeführt werden, sondern vielmehr aus einer ungiftigen Vorläufer-Substanz in kleinen und zum vollständigen Verbrauch im Katalysator bestimmten Mengen erzeugt werden. Eine geeignete Vorläufer-Substanz ist beispielsweise eine wässrige Harnstofflösung oder fester Harnstoff.

Die wässrige Harnstofflösung wird vor dem Katalysator in das heiße Abgas eingeleitet, wobei Ammoniak freigesetzt wird (DE-A-38 30 045). In einer alternativen Möglichkeit wird der feste und insbesondere pulverförmige Harnstoff dem Abgas zugeführt, wobei ebenfalls Ammoniak freigesetzt wird (DE 43 08 542).

Bei instationär betriebene Verbrennungsmotoren, beispielsweise bei den im Kraftfahrzeugbereich eingesetzten Dieselmotoren, treten aufgrund von Lastwechseln zeitlich sehr stark variierende Stickoxidmengen im Abgas auf, die eine Variierung der Menge an zudosiertem Ammoniak erforderlich machen. Dem Abgas sollte dabei nur soviel Harnstoff oder Harnstofflösung zugeführt werden, daß der freigesetzte Ammoniak bei der katalytischen Reduktion vollständig verbraucht wird oder zumindest in dem Katalysator gespeichert bleibt. Tritt in den Katalysator zuviel Ammoniak ein, so verläßt dieser den Katalysator und tritt in die Umwelt aus. Dies wird als Schlupf bezeichnet und muß wegen der Giftigkeit des Ammoniaks vermieden werden. Zugleich sollte ausreichend Reduktionsmittel zudosiert werden, um eine möglichst hohe Umsatzrate der Stickoxide zu Stickstoff zu erreichen. Die Dosierung der wässrigen Harnstofflösung bzw. des Harnstoffs ist daher von entscheidender Bedeutung.

Beim festen Harnstoff bestehen Schwierigkeiten im Hinblick auf die notwendige Genauigkeit bei der Dosierung. Zudem können sich Pyrolyseprodukte des festen Harnstoffs ablagern und den Wirkungsgrad des Katalysators beeinträchtigen.

Der Nachteil der Verwendung einer wässrigen Harnstofflösung ist darin zu sehen, daß ein relativ großer Vorratsbehälter für die wässrige Harnstofflösung notwendig ist. Diese muß zudem frostbeständig sein und bei tiefen Temperaturen vor dem Einfrieren geschützt werden. Weiterhin müßte zur Gewährleistung einer Versorgung aller Fahrzeuge mit Harnstofflösung eine entsprechende, mit dem Tankstellennetz vergleichbare, Infrastruktur geschaffen werden.

Der vorliegenden Erfindung liegt die Aufgabe zugrunde, ein Verfahren sowie eine Vorrichtung zur katalytischen Reduzierung von Stickoxiden anzugeben, bei denen eine hohe Betriebssicherheit in Verbindung mit einer hohen Dosiergenauigkeit gewährleistet sind.

Zur erfindungsgemäßen Lösung der erstgenannten Aufgabe durchströmt bei dem Verfahren das Abgas einer Verbrennungsanlage, insbesondere das Abgas eines mit Luftüberschuß betriebenen Verbrennungsmotors, einen Katalysator, wobei dem Abgas vor Durchströmen des Katalysators eine flüssige Reduktionsmittellösung zudosiert wird, die vor dem Zudosieren bedarfsabhängig aus einem festen Reduktionsmittel und einem flüssigen Lösungsmittel hergestellt wird, bei dem die Reduktionsmittellösung gesättigt ist und in einem Mischbereich auf eine vorgegebene Temperatur thermostatisiert wird, wobei die Temperatur auf die Schmelztemperatur des eutektischen Gemisches zwischen dem Reduktionsmittel und dem Lösungsmittel eingestellt wird.

Die Reduktionsmittellösung wird im wesentlichen erst unmittelbar vor dem Verbrauch im Katalysator hergestellt. Als Reduktionsmittel wird bevorzugt Harnstoff und als Lösungsmittel wird bevorzugt Wasser verwendet. Da die Reduktionsmittellösung erst unmittelbar vor dem Zudosieren hergestellt wird, entfällt ein aufwendiges Bevorratungssystem für die Reduktionsmittellösung, und das feste Reduktionsmittel läßt sich in einem einfachen Vorratsbehälter mitführen.

Bei dem Verfahren wird pro Zeiteinheit in etwa nur die Menge an Reduktionsmittellösung hergestellt, die für eine möglichst hohe Reduzierung der anfallenden Stickoxide nötig ist. Zur Vermeidung von Schlupf wird dabei unter der theoretisch erzielbaren Umsatzrate gearbeitet, d.h. es wird weniger Reduktionsmittel zudosiert als für die Reduzierung der Stickoxide nötig ist. Die hergestellte Menge hängt dabei im wesentlichen von Betriebsparametern der Verbrennungsanlage bzw. des Verbrennungsmotors und gegebenenfalls von Betriebsparametern des Katalysators ab. Der Bedarf an Reduktionsmittellösung schwankt dabei insbesondere bei den im Kraftfahrzeugbereich eingesetzten und instationär betriebenen Verbrennungsmotoren in kurzen Zeitabständen zum Teil sehr stark. Es werden daher große Anforderungen an die Dosiergenauigkeit gestellt, die beispielsweise mit dem unmittelbaren Einbringen eines festen Reduktionsmittels in das Abgas nur schwer erfüllt werden können. Das Verfahren zeichnet sich dadurch aus, daß es den Vorteil einer einfachen Bevorratung des festen Reduktionsmittels mit dem Vorteil der guten Dosierbarkeit einer Reduktionsmittellösung kombiniert.

Durch die Thermostatisierung oder Temperierung des Mischbereichs, in dem die Reduktionsmittellösung gesammelt oder hergestellt wird, wird automatisch entsprechend dem Phasendiagramm für das Gemisch aus Reduktionsmittel und Lösungsmittel eine genau definierte Konzentration der gesättigten Reduktionsmittellösung eingestellt. Die genau definierte Konzentration ist ein entscheidender Vorteil, um eine hohe Dosiergenauigkeit zu erzielen. In der Regel wird die Reduktionsmittellösung volumetrisch in das Abgas zudosiert, so daß die zudosierte Menge an Reduktionsmittel entscheidend von der Konzentration des Reduktionsmittels in der Reduktionsmittellösung abhängt. Mit der Thermostatisierung des Mischbereichs ist die Konzentration festgelegt und muß nicht separat, beispielsweise über einen Sensor, bestimmt werden.

Dabei wird die Temperatur des Mischbereichs auf die Schmelztemperatur des eutektischen Gemisches zwischen dem Reduktionsmittel und dem Lösungsmittel eingestellt. Die Temperatur des eutektischen Gemisches ist die niedrigste Temperatur, bei der die Lösung existiert. Unterhalb dieser Temperatur geht die Lösung in die feste Phase über. Bei dieser Temperatur liegt zudem ausschließlich die Lösung in flüssiger Form vor. Die an der Lösung beteiligten Partner, das Reduktionsmittel und das Lösungsmittel, liegen bei der Temperatur des eutektischen Gemisches bereits in fester Form vor. Die Konzentration der Lösung verändert sich daher auch dann nicht, wenn das Lösungsmittel im Überschuß vorhanden ist. Denn überschüssiges Lösungsmittel geht bei dieser Temperatur in die feste Phase über. Beim eutektischen Gemisch ist die Aufrechterhaltung der Gleichgewichtskonzentration daher besonders einfach, und die Konzentration kann nicht verdünnt werden.

Bevorzugt wird der Mischbereich innerhalb des Vorratsbehälters für das Reduktionsmittel thermostatisiert. Dadurch entfällt ein separater Behälter für die Herstellung der Reduktionsmittellösung. Zudem ist keine spezielle Zuleitung zum Mischbereich für das feste Reduktionsmittel nötig. Die Anordnung des Mischbereichs im Vorratsbehälter besitzt daher den Vorteil einer einfachen und platzsparenden Ausführungsform.

Um den Energieaufwand für die Thermostatisierung sowie die Menge an vorgehaltener Reduktionsmittellösung möglichst gering zu halten, wird das Volumen des thermostatisierten Mischbereichs gesteuert. Die Steuerung erfolgt hierbei im wesentlichen in Abhängigkeit des Bedarfs an Reduktionsmittel für die Entstickung im Katalysator. Das Volumen kann dabei verändert werden, indem die Temperiereinrichtung beispielsweise modular aufgebaut ist und einzelne Module zu- oder abgeschaltet werden. Gemäß dieser Möglichkeit werden demnach unterschiedliche Volumina der Reduktionsmittellösung thermostatisiert. Weiterhin kann das Volumen beispielsweise durch eine gesteuerte Zudosierung des Lösungsmittels verändert werden. In diesem Fall werden demnach unterschiedliche Volumina an Reduktionsmittellösung zur Thermostatisierung bereitgestellt.

Bevorzugt wird die Konzentration der Reduktionsmittellösung mit Hilfe eines Sensors bestimmt, so daß eine möglichst genaue Dosierung des Reduktionsmittels in das Abgas gewährleistet ist. Die Bestimmung der Konzentration zusätzlich zu der über die Thermostatisierung bestimmten Konzentration stellt eine redundante Auslegung zur Erhöhung der Betriebssicherheit dar. Insbesondere bei einer Funktionsstörung oder einem Ausfall der Temperiereinrichtung wird eine genaue Dosierung gewährleistet. Die Bestimmung der Konzentration über einen Sensor kann auch alternativ zu der Thermostatisierung eingesetzt werden.

In einer besonders vorteilhaften Weise wird das Lösungsmittel über eine Zuleitung zugeführt, die thermisch an eine Abgasleitung für das Abgas angekoppelt ist. Dadurch wird gewährleistet, daß das Lösungsmittel auch bei tiefen Temperaturen nicht einfrieren kann. Der Übertrag der Wärme vom Abgas in das Lösungsmittel dient zur Erhöhung der Betriebssicherheit.

Bevorzugt wird als Lösungsmittel Wasser verwendet, das aus Wasserdampf gewonnen wird, der beim Verbrennungsprozeß in der Verbrennungsanlage anfällt. Dadurch entfällt ein spezieller Vorratstank für das Lösungsmittel. Das Lösungsmittel braucht weder separat noch in Verbindung mit dem Reduktionsmittel in Form einer Reduktionsmittellösung mitgeführt werden. Die Gewinnung des Lösungsmittels aus dem Abgas ermöglicht daher einen geringeren Platzbedarf und eine Gewichtsreduzierung gegenüber einem voluminösen Bevorratungssystem für eine Reduktionsmittellösung. Diese Vorteile sind im Kraftfahrzeugsektor von wesentlicher Bedeutung.

Die Einrichtung zur katalytischen Reduzierung von Stickoxiden im Abgas einer Verbrennungsanlage, insbesondere im Abgas eines mit Luftüberschuß betriebenen Verbrennungsmotors, umfaßt zur Lösung der zweitgenannten Aufgabe gemäß der Erfindung eine an die Verbrennungsanlage angeschlossene Abgasleitung, in die ein vom Abgas durchströmbarer Katalysator angeordnet ist, einen Vorratsbehälter für ein Reduktionsmittel in fester Form, einen Mischbereich zur bedarfsabhängigen Herstellung einer flüssigen Reduktionsmittellösung aus dem festen Reduktionsmittel und einem flüssigen Lösungsmittel, eine Dosiereinrichtung für die Dosierung der Reduktionsmittellösung in das Abgas, die direkt mit dem Mischbereich und der Abgasleitung verbunden ist, sowie eine Temperatureinrichtung für den Mischbereich, mit der der Mischbereich auf eine vorgebbare Temperatur einstellbar ist, insbesondere auf die Schmelztemperatur des eutektischen Gemisches zwischen dem Lösungsmittel und dem Reduktionsmittel.

Vorteilhafte Ausgestaltungen der Vorrichtung sind den entsprechenden Unteransprüchen zu entnehmen. Die zu dem Verfahren aufgeführten Vorteile gelten sinngemäß auch für die Vorrichtung.

Ausführungsbeispiele der Erfindung werden anhand der Zeichnung näher erläutert. Es zeigen:
- FIG 1: eine schematische und ausschnittsweise Darstellung einer Einrichtung zur katalytischen Abgasreinigung und
- FIG 2: eine separate Anordnung eines Mischbereichs in einer schematischen Darstellung.

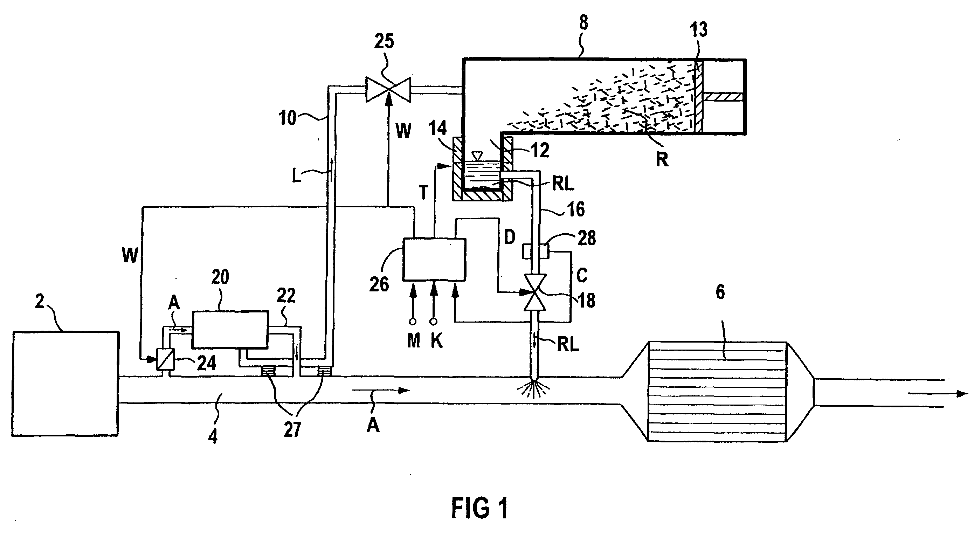

Gemäß der FIG 1 ist an einer Verbrennungsanlage, insbesondere an einem Verbrennungsmotor 2, eine Abgasleitung 4 zur Abführung der im Verbrennungsmotor 2 entstehenden Abgase A angeordnet. Das Abgas A wird über die Abgasleitung 4 zu einem Katalysator 6 geführt und durchströmt diesen. Der Verbrennungsmotor 2 ist insbesondere ein instationär und mit Luftüberschuß betriebener Diesel-Motor für den Kraftfahrzeugbereich. Der Katalysator 6 ist insbesondere ein DeNOx-Katalysator, mit dem die im Abgas A enthaltenen Stickoxide mit einem Reduktionsmittel R nach dem Verfahren der selektiven katalytischen Reduktion (SCR) zu umweltfreundlichem Stickstoff und Wasser umgesetzt werden. Als Reduktionsmittel R wird insbesondere Ammoniak oder eine ammoniakhaltige Verbindung verwendet. Eine Vorstufe des Ammoniaks, aus der dieser erhalten werden kann, ist beispielsweise Harnstoff. Die Vorstufe wird hier ebenfalls als Reduktionsmittel R bezeichnet.

Das Reduktionsmittel R befindet sich in fester oder pulverförmiger Form in einem Vorratsbehälter 8. In den Vorratsbehälter 8 mündet eine Zuleitung 10, über die ein Lösungsmittel L in den Vorratsbehälter 8 zugeführt wird. Der Vorratsbehälter 8 erstreckt sich beispielsweise in waagrechter - wie gezeigt - oder auch in senkrechter Richtung. Der Vorratsbehälter 8 weist an seinem rechten Ende einen verschiebbaren Stempel 13 auf, mit dem das feste Reduktionsmittel R zu der linken Seite hin transportiert werden kann, auf der ein Mischbereich 12 in Form einer Mulde angeordnet ist. In den Mischbereich 12 wird zusätzlich zum Reduktionsmittel R das Lösungsmittel L von oben zugeführt. In dem Mischbereich 12 werden das Lösungsmittel L und das Reduktionsmittel R miteinander vermischt, und die dabei gebildete Reduktionsmittellösung RL wird gesammelt.

Am Mischbereich 12 ist eine Temperiereinrichtung 14 angeordnet, mit der die Temperatur der Reduktionsmittellösung auf einer vorgebbaren Temperatur gehalten wird, so daß sich bei Vorliegen einer gesättigten Reduktionsmittellösung automatisch eine definierte Gleichgewichtskonzentration einstellt. Vom Mischbereich 12 führt eine Ableitung 16 für die Reduktionsmittellösung RL zu einer Dosiereinrichtung 18, die beispielsweise ein Ventil ist. Über die Dosiereinrichtung 18 wird die Reduktionsmittellösung RL in das Abgas A beispielsweise über eine Düse volumetrisch eindosiert. Die Reduktionsmittellösung RL vermischt sich mit dem heißen Abgas A bevor dieses in den Katalysator 6 einströmt. Dabei wird aus der wässrigen Reduktionsmittellösung RL Ammoniak freigesetzt, vorzugsweise durch Reduktion an einem nicht näher dargestellten Hydrolysekatalysator.

Das Lösungsmittel L ist insbesondere Wasser, das aus dem im Abgas A befindlichen Wasserdampf in einem Kondensator 20 auskondensiert wird. Ein Teil des Abgases A kann hierzu beispielsweise über eine Bypassleitung 22 über den Kondensator 20 geleitet werden. Im Kondensator 20 wird das Abgas A ausreichend abgekühlt, so daß Wasser auskondensiert. In der Regel übersteigt die im Abgas A mitgeführte Wassermenge den Bedarf an Lösungsmittel L. Zur Regulierung der benötigten Menge an Lösungsmittel L ist daher in der Bypassleitung 22 beispielsweise eine Klappe 24 vorgesehen. Alternativ oder zusätzlich kann in der Zuleitung 10 für den gleichen Zweck ein Ventil 25 angeordnet sein. Die Zuleitung 10 ist an die Abgasleitung 4 thermisch angekoppelt, um zu verhindern, daß das Wasser bei niedrigen Umgebungstemperaturen einfriert. Hierzu sind beispielsweise Wellbleche 27 vorgesehen, die mit der Zuleitung 10 und der Abgasleitung 4 verbunden, insbesondere verschweißt sind.

Bei der Vorrichtung zur katalytischen Reduzierung ist weiterhin ein Steuerelement 26 vorgesehen, mit dem die notwendige Menge an Reduktionsmittel R ermittelt und das entsprechende Volumen der pro Zeiteinheit benötigten Reduktionsmittellösung RL gesteuert wird. Bei instationär betriebenen Verbrennungsmotoren fallen aufgrund von Lastwechseln während des Betriebs unterschiedliche Mengen an Stickoxiden im Abgas A an. Je nach Betrieb des Verbrennungsmotors 2 kann sich die anfallende Sticksteffmenge unter Umständen abrupt ändern. Das Steuerelement 26 ist von entscheidender Bedeutung, um eine möglichst hohe Stickoxidminderung in dem Katalysator 6 zu erzielen, ohne daß Schlupf auftritt.

Hierzu werden an das Steuerelement 26 Kenndaten M des Verbrennungsmotors 2 und zusätzlich oder optional Kenndaten K des Kondensators 6 übermittelt. Die Kenndaten M des Verbrennungsmotors 2 sind insbesondere seine Drehzahl, sein Drehmoment, seine Betriebstemperatur sowie der momentane Spritverbrauch. Die Kenndaten K des Katalysators 6 sind insbesondere sein Füllstand mit im Katalysator 6 gespeichertem Reduktionsmittel R, seine katalytische Aktivität sowie seine Betriebstemperatur. An das Steuerelement 26 wird weiterhin optional die von einem Sensor 28 ermittelte Konzentration C der Reduktionsmittellösung RL übermittelt. Der Sensor 28 ist hierzu beispielsweise zwischen Mischbereich 12 und Dosiereinrichtung 10 vorgesehen.

Anhand der übermittelten Daten ermittelt das Steuerelement 26 eine Steuergröße D, die an die Dosiereinrichtung 18 geleitet wird und die das über die Dosiereinrichtung 18 zu dosierende Volumen der Reduktionsmittellösung RL bestimmt. Von dem Steuerelement 26 wird weiterhin ein Steuersignal W an das Ventil 25 oder an die Klappe 24 übermittelt, um die Zufuhr des Lösungsmittels L in den Mischbereich 12 zu steuern. Mit einem weiteren Steuersignal T wird die Temperiereinrichtung 14 angesteuert.

Die Konzentration C der Reduktionsmittellösung RL im Mischbereich 12 wird durch die Wahl einer vorgebbaren Temperatur festgelegt, die über die Temperiereinrichtung 14 eingestellt und gehalten wird. Die einzustellende Temperatur wird über das Steuersignal T von dem Steuerelement 26 vorgegeben. Bei der vorgegebenen Temperatur stellt sich in der Reduktionsmittellösung RL eine genau definierte Gleichgewichtskonzentration ein. Um die Konzentration der Reduktionsmittellösung RL genau einstellen zu können, ist es vorteilhaft, wenn das Reduktionsmittel R im Uberschuß vorliegt. Entscheidend ist, daß die Reduktionsmittellosung RL unter den vorgegebenen Bedingungen ihre Gleichgewichtskonzentration erreichen kann. Bevorzugt wird die Temperatur auf die Temperatur des eutektischen Gemisches eingestellt. Im Falle von Harnstoff und Wasser liegt diese Temperatur bei etwa minus 11°C, und die Gleichgewichtskonzentration des eutektischen Gemisches beträgt 32,5 Gew.-% an Harnstoff.

Die Temperiereinrichtung umfaßt vorzugsweise ein Peltier-Element, da dies besonders einfach ausgestaltet und auf einfache Weise bedienbar ist. Die Temperiereinrichtung 14 weist bevorzugt mehrere Module auf, die zu- bzw. abgeschaltet werden können. Die Zu- bzw. Abschaltung wird beispielsweise über das Steuersignal T gesteuert. Durch die Zu- bzw. Abschaltung der Module kann das Volumen des thermostatisierten Mischbereiches 12, in dem die vorgegebene Temperatur herrscht, eingestellt werden. Damit wird der Energieaufwand für die Temperierung, insbesondere Kühlung, der Reduktionsmittellösung RL möglichst gering gehalten. Zugleich wird nur die unmittelbar benötigte Menge an Reduktionsmittellösung RL bevorratet. Das Volumen des Mischbereiches 12 kann zusätzlich oder alternativ auch über die Zufuhr des Reduktionsmittels R und des Lösungsmittels L gesteuert werden. Hierzu werden beispielsweise der Stempel 13 bzw. das Ventil 25 oder die Klappe 24 angesteuert.

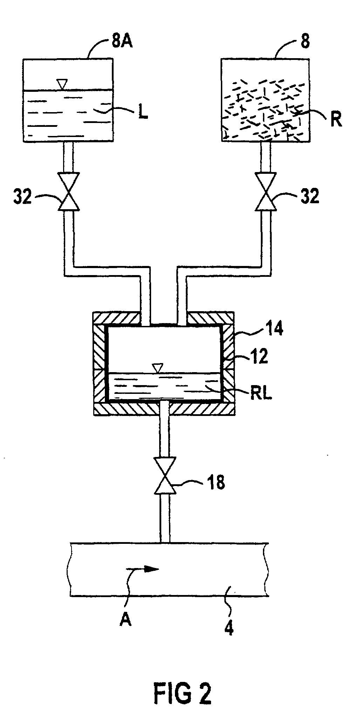

Gemäß der FIG 2 ist neben dem Vorratsbehälter 8 für das Reduktionsmittel R ein weiterer Vorratsbehälter 8a für das Lösungsmittel L vorgesehen. Als Vorratsbehälter 8a kann beispielsweise der in FIG 1 gezeigte Kondensator 20 verwendet werden. Die beiden Vorratsbehälter 8,8a stehen jeweils mit einem separaten Mischbereich 12 über eine Leitung in Verbindung. Die Zufuhr von Reduktionsmittel R und Lösungsmittel L wird über Ventile 32 gesteuert. Der Mischbereich 12 wird mit Hilfe einer modular aufgebauten Temperiereinrichtung 14 temperiert, so daß sich in dem Mischbereich 12 eine gesättigte Reduktionsmittellösung RL mit einer definierten Gleichgewichtskonzentration herausbildet. Die gesättigte Reduktionsmittellösung RL wird aus dem Mischbereich 12 über eine Dosiereinrichtung 18 dem Abgas A zudosiert.

Der Vorratsbehälter 8 für das Reduktionsmittel R ist insbesondere beim Einsatz in Kraftfahrzeugen derart bemessen, das ausreichend Reduktionsmittel R für die Zeitdauer zwischen zwei Regelwartungen gespeichert werden kann. Der Vorratsbehälcer 8 stellt daher eine ausreichende Menge an Reduktionsmittel R zur Verfügung, um die in einem Wartungsintervall zwischen zwei Regelwartungen anfallende Stickoxide zu reduzieren. Eine derartige Dimensionierung ist für den Fahrzeugbetreiber äußerst komfortabel da er keine Auffüllvorgänge für das Reduktionsmittel R vornehmen muß. Ein entscheidender Vorteil ist weiterhin, daß die aufwendige Einrichtung einer flächendeckenden Infrastruktur zur Bereitstellung von Reduktionsmittel R, insbesondere zur Bereitstellung einer flüssigen Reduktionsmittellösung RL, nicht nötig ist.

Das Lösungsmittel L und das Reduktionsmittel R können alternativ zu den zu FIG 1 und FIG 2 beschriebenen Möglichkeiten bereits vor dem Mischbereich 12 zusammengeführt werden. Die gewünschte Temperatur der Reduktionsmittellösung RL wird erst im Mischbereich 12 eingestellt, um eine definierte Gleichgewichtskonzentration zu erhalten.

Die beschriebene Ausführungsform der Vorrichtung zur katalytischen Reduzierung von Stickoxiden kombiniert die Vorteile einer Reduktionsmittellösung RL, nämlich die hohe Dosiergenauigkeit, mit den Vorteilen der Bevorratung eines festen Reduktionsmittels R, nämlich der geringe Platz- und Gewichtsbedarf. Die Reduktionsmittellösung RL wird bedarfsabhängig erst unmittelbar vor dem Zudosieren aus dem Reduktionsmittel R und dem Lösungsmittel L hergestellt. Das Lösungsmittel L wird insbesondere erst beim Betrieb des Kraftfahrzeugs beispielsweise aus dem Abgas A gewonnen, so daß ein spezieller Vorratstank für das Lösungsmittel L entfallen kann. In der hergestellten Reduktionsmittellösung RL wird durch eine Thermostatisierung eine fest definierte Gleichgewichtskonzentration eingestellt, so daß eine hohe Dosiergenauigkeit gewährleistet ist.

## Patentansprüche

1. Verfahren zur katalytischen Reduzierung von Stickoxiden im Abgas (A) einer Verbrennungsanlage (2), insbesondere im Abgas eines mit Luftüberschuß betriebener Verbrennungsmotors, wobei
- das Abgas (A) einen Katalysator (6) durchströmt,
- dem Abgas (A) vor Durchströmen des Katalysators (6) eine flüssige Reduktionsmittellösung (RL) zudosiert wird,
- die Reduktionsmittellösung (RL) vor dem Zudosieren bedarfsabhängig aus einem festen Reduktionsmittel (R) und einem flüssigen Lösungsmittel (L) hergestellt wird und
- bei dem die Reduktionsmittellösung (RL) gesättigt ist und in einem Mischbereich (12) auf eine vorgegebenen Temperatur thermostatisiert wird, wobei die Temperatur auf die Schmelztemperatur des eutektischen Gemisches zwischen dem Reduktionsmittel (R) und dem Lösungsmittel (L) eingestellt wird.

2. Verfahren nach Anspruch 1, bei dem die Reduktionsmittellösung (RL) innerhalb eines Vorratsbehälters (8) für das feste Reduktionsmittel (R) thermostatisiert wird.

3. Verfahren nach Anspruch 1 oder 2, bei dem das Volumen des Mischbereichs (12) gesteuert wird.

4. Verfahren nach einem der vorhergehenden Ansprüche, bei dem die Konzentration (C) der Reduktionsmittellösung (RL) bestimmt wird.

5. Verfahren nach einem der vorhergehenden Ansprüche, bei dem das Lösungsmittel (L) über eine Zuleitung (10) zugeführt wird, die thermisch an eine Abgasleitung (4) für das Abgas (A) angekoppelt ist.

6. Verfahren nach einem der vorhergehenden Ansprüche, bei dem als Lösungsmittel (L) Wasser verwendet wird, das insbesondere aus Wasserdampf gewonnen wird, der beim Verbrennungssprozeß in der Verbrennungsanlage (2) anfällt.

7. Verfahren nach einem der vorhergehenden Ansprüche, bei dem Harnstoff als festes Reduktionsmittel (R) verwendet wird.

8. Vorrichtung zur katalytischen Reduzierung von Stickoxiden im Abgas (A) einer Verbrennungsanlage (2), insbesondere im Abgas (A) eines mit Luftüberschuß betriebenen Verbrennungsmotors, mit
- einer an die Verbrennungsanlage (2) angeschlossenen Abgasleitung (4), in der ein vom Abgas (A) durchströmbarer Katalysator (6) angeordnet ist,
- einem Vorratsbehälter (8) für ein Reduktionsmittel (R) in fester Form,
- einem Mischbereich (12) zur bedarfsabhängigen Herstellung einer flüssigen Reduktionsmittellösung (RL) aus dem festen Reduktionsmittel (R) und einem flüssigen Lösungsmittel (L),
- mit einer Dosiereinrichtung (18) für die Dosierung der Reduktionsmittellösung (RL) in das Abgas (A), wobei die Dosiereinrichtung (18) mit dem Mischbereich (12) und mit der Abgasleitung (4) verbunden ist, und
- mit einer Temperiereinrichtung (14) für den Mischbereich (12), mit der der Mischbereich (12) auf eine vorgebbare Temperatur einstellbar ist, insbesondere auf die Schmelztemperatur des eutektischen Gemisches zwischen dem Lösungsmittel (L) und dem Reduktionsmittel (R).

9. Vorrichtung nach Anspruch 8, bei der die Temperiereinrichtung (14) ein Peltier-Element umfaßt.

10. Vorrichtung nach Anspruch 8 oder 9, bei der der Mischbereich (12) in dem Vorratsbehälter (8) angeordnet ist.

11. Vorrichtung nach einem der Ansprüche 8 bis 10, bei der eine Zuleitung (10) für das Lösungsmittel (L) vorgesehen ist, die an die Abgasleitung (4) thermisch angekoppelt ist.

12. Vorrichtung nach einem der Ansprüche 8 bis 11, bei der ein Kondensator (20) zur Kondensation von im Abgas (A) mitgeführten Wasserdampf vorgesehen ist, und das kondensierte Wasser als Lösungsmittel (L) in die Zuleitung (10) einspeisbar ist.

## Claims

1. Method for catalytically reducing nitrogen oxides in the exhaust gas (A) from a combustion unit (2), in particular in the exhaust gas from an internal combustion engine operated with excess air, in which method
- the exhaust gas (A) flows through a catalytic converter (6),
- a fluid reducing agent solution (RL) is metered into the exhaust gas (A) before it flows through the catalytic converter (6),
- the reducing agent solution (RL), before it is metered in, is produced according to demand from a solid reducing agent (R) and a fluid solvent (L), and
- in which the reducing agent solution (RL) is saturated and is thermostated to a predetermined temperature in a mixing area (12), the temperature being set to the melting temperature of the eutectic mixture between the reducing agent (R) and the solvent (L).

2. Method according to Claim 1, in which the reducing agent solution (RL) is thermostated inside a storage container (8) for the solid reducing agent (R).

3. Method according to Claim 1 or 2, in which the volume of the mixing area (12) is controlled.

4. Method according to one of the preceding claims, in which the concentration (C) of the reducing agent solution (RL) is determined.

5. Method according to one of the preceding claims, in which the solvent (L) is supplied via a feed line (10) which is thermally coupled to an exhaust pipe (4) for the exhaust gas (A).

6. Method according to one of the preceding claims, in which the solvent (L) used is water which is obtained in particular from steam produced in the combustion unit (2) during the combustion process.

7. Method according to one of the preceding claims, in which the solid reducing agent (R) used is urea.

8. Device for catalytically reducing nitrogen oxides in the exhaust gas (A) from a combustion unit (2), in particular in the exhaust gas (A) from an internal combustion engine operated with excess air, having
- an exhaust pipe (4) which is connected to the combustion unit (2) and in which a catalytic converter (6), through which the exhaust gas (A) can flow, is arranged,
- a storage container (8) for a reducing agent (R) in solid form,
- a mixing area (12) for producing a fluid reducing agent solution (RL) according to demand from the solid reducing agent (R) and a fluid solvent (L),
- having a metering device (18) for metering the reducing agent solution (RL) into the exhaust gas (A), the metering device (18) being connected to the mixing area (12) and the exhaust pipe (4), and
- having a temperature-control device (14) for the mixing area (12) which can be used to set the mixing area (12) to a predeterminable temperature, in particular to the melting temperature of the eutectic mixture between the solvent (L) and the reducing agent (R).

9. Device according to Claim 8, in which the temperature-control device (14) comprises a Peltier element.

10. Device according to Claim 8 or 9, in which the mixing area (12) is arranged in the storage container (8).

11. Device according to one of Claims 8 to 10, in which a feed line (10) for the solvent (L) is provided, which feed line is thermally coupled to the exhaust pipe (4).

12. Device according to one of Claims 8 to 11, in which a condenser (20) is provided for the purpose of condensing steam entrained in the exhaust gas (A), and the condensed water can be fed into the feed line (10) as solvent (L).

## Revendications

1. Procédé de réduction catalytique d'oxydes d'azote dans les gaz (A) d'échappement d'une installation (2) de combustion, notamment dans les gaz d'échappement d'un moteur à combustion interne alimenté avec un excès d'air, dans lequel
- on fait passer les gaz (A) d'échappement dans un pot (6) catalytique,
- on ajoute aux gaz (A) d'échappement, avant de les faire passer dans le pot (6) catalytique, une solution (RL) liquide d'agent réducteur de manière dosée,
- on prépare la solution (RL) d'agent réducteur avant de l'ajouter de manière dosée en fonction des besoins à partir d'un agent (R) réducteur solide et d'un solvant (L) liquide et
- on sature la solution (RL) d'agent réducteur et on la thermostatise dans une zone (12) de mélange à une température prescrite, la température étant réglée sur la température de fusion du mélange eutectique entre l'agent (R) réducteur et le solvant (L).

2. Procédé suivant la revendication 1, dans lequel on thermosatise la solution (RL) d'agent réducteur dans un réservoir (8) pour l'agent (R) réducteur solide.

3. Procédé suivant la revendication 1 ou 2, dans lequel on règle le volume de la zone (12) de mélange.

4. Procédé suivant l'une des revendications précédentes, dans lequel on détermine la concentration (C) de la solution (RL) d'agent réducteur.

5. Procédé suivant l'une des revendications précédentes, dans lequel on apporte le solvant (L) par un conduit (10) qui est couplé thermiquement à un conduit (4) pour les gaz (A) d'échappement.

6. Procédé suivant l'une des revendications précédentes, dans lequel on utilise comme solvant (L) de l'eau que l'on obtient notamment à partir de vapeur d'eau qui se produit lors de l'opération de combustion dans l'installation (2) de combustion.

7. Procédé suivant l'une des revendications précédentes, dans lequel on utilise de l'urée comme agent (R) réducteur solide.

8. Dispositif de réduction catalytique d'oxydes d'azote dans les gaz (A) d'échappement d'une installation (2) de combustion, notamment dans les gaz (A) d'échappement d'un moteur à combustion interne alimenté en un excès d'air, comprenant
- un conduit (4) pour les gaz d'échappement qui communique avec l'installation (2) de combustion et dans lequel est monté un pot (6) catalytique dans lequel peuvent passer les gaz (A) d'échappement,
- un réservoir (8) pour un agent (R) réducteur sous forme solide,
- une zone (12) de mélange pour préparer en fonction des besoins une solution (RL) liquide d'agent réducteur à partir de l'agent (R) réducteur solide et d'un solvant (L) liquide,
- un dispositif (18) de dosage pour l'addition de manière dosée de la solution (RL) d'agent réducteur dans les gaz (A) d'échappement, le dispositif (18) d'addition de manière dosée communiquant avec la zone (12) de mélange et avec le conduit (4) pour les gaz d'échappement et
- un dispositif (14) de mise en température de la zone (12) de mélange par lequel la zone (12) de mélange peut être réglée à une température qui peut être prescrite, notamment au point de fusion du mélange eutectique entre le solvant (L) et l'agent (R) réducteur.

9. Dispositif suivant la revendication 8, dans lequel le dispositif (14) de mise en température comprend un élément à effet Peltier.

10. Dispositif suivant la revendication 8 ou 9, dans lequel la zone (12) de mélange est disposée dans le réservoir (8).

11. Dispositif suivant l'une des revendications 8 à 10, dans lequel il est prévu un conduit (10) d'apport du solvant (L) qui est couplé thermiquement au conduit (4) pour les gaz d'échappement.

12. Dispositif suivant l'une des revendications 8 à 11, dans lequel il est prévu un condenseur de condensation de la vapeur d'eau entraînée dans les gaz (A) d'échappement et l'eau condensée peut être injectée dans le conduit (10) d'apport en tant que solvant (L).
